# EUROPÄISCHE PATENTSCHRIFT

(11) **EP 3 092 924 B1**
(45) Veröffentlichungstag und Bekanntmachung des Hinweises auf die Patenterteilung: **31.07.2019**
(21) Anmeldenummer: 16000980.9
(22) Anmeldetag: 02.05.2016
(51) Int. Cl.: A47J 31/36, B60N 3/16, A47J 31/00

(54) **VORRICHTUNG UND VERFAHREN ZUR ZUBEREITUNG EINES HEISSGETRÄNKS**
DEVICE AND METHOD FOR PREPARING A HOT DRINK
DISPOSITIF ET PROCEDE DESTINES A LA PREPARATION D'UNE BOISSON CHAUDE

(30) Priorität: 09.05.2015 DE 102015006127
(43) Veröffentlichungstag der Anmeldung: 16.11.2016
(73) Patentinhaber: MAN Truck & Bus SE, 80995 München (DE)
(72) Erfinder: Siflinger, Markus, 85604 Zorneding (DE); Gündogdu, Oguzhan, 85221 Dachau (DE)
(74) Vertreter: Liebl, Thomas

(56) Entgegenhaltungen:
- EP-A1- 2 301 394
- EP-A2- 1 089 240
- CN-A- 101 056 560
- DE-A1-102004 016 194
- DE-A1-102008 007 254
- DE-U1- 20 105 672

## Beschreibung

Die Erfindung betrifft eine Vorrichtung zur Zubereitung eines Heißgetränks, insbesondere für ein Fahrzeug, nach dem Oberbegriff des Patentanspruches 1, ein Verfahren zur Zubereitung eines Heißgetränks nach dem Oberbegriff des Patentanspruches 14 sowie ein Fahrzeug, insbesondere ein Nutzfahrzeug, mit der Vorrichtung und/oder zur Durchführung des Verfahrens nach Patentanspruch 15.

Es ist bekannt, bei einem Fahrzeug, insbesondere bei einem Nutzfahrzeug, eine Portionskaffeemaschine vorzusehen, bei der aus einer Portion einer in einem Portionsbehälter befindlichen, zu extrahierenden Kaffeesubstanz ein Kaffee-Heißgetränk zubereitet wird. Hierzu wird der Portionsbehälter in einer Brühkammer der Portionskaffeemaschine angeordnet und die zu extrahierende Substanz mit heißem Wasser aufgebrüht. Bei dem Portionsbehälter kann es sich dabei beispielsweise um ein sogenanntes "Pad" oder um eine sogenannte "Kapsel" handeln. Des Weiteren ist es auch bekannt, nicht nur Kaffee, sondern auch andere Arten von flüssigen Lebensmitteln, wie beispielsweise Tee, Kakao, Suppen oder dergleichen, mittels eines derartigen Verfahrens zuzubereiten.

Aus der DE 203 15 552 U1 ist eine Vorrichtung zum Zubereiten und Bereitstellen von flüssigen Lebensmitteln in einem Fahrzeug bekannt, bei der ein verlagerbares Schieberelement vorgesehen ist, mittels dem ein Tab aufgenommen werden kann. Zur Zubereitung eines flüssigen Lebensmittels wird das Schieberelement zunächst manuell aus einem Gehäuse der Vorrichtung herausgezogen und mit einem Tab bestückt. Anschließend wird das Schieberelement wieder manuell in das Gehäuse hineingeschoben, wodurch das Tab in eine Brühkammer der Vorrichtung gefördert wird. Nach Zubereitung des flüssigen Lebensmittels wird das Schieberelement wieder manuell aus dem Gehäuse herausgezogen. Während dieses Herausziehens wird der Tab ausgeworfen, so dass der Tab in einen Restebehälter fällt. Eine derartige Vorrichtung hat jedoch den Nachteil, dass der Fahrer des Fahrzeugs eine Vielzahl von Bedienungsschritten durchführen muss, um ein Heißgetränk zuzubereiten. Für den Fahrer ist es somit schwierig, während einer Fahrt mit dem Fahrzeug ein Heißgetränk zuzubereiten, ohne vom Straßenverkehr abgelenkt zu werden.

Die DE10 2004 016 194 A1 zeigt eine Heißgetränkezubereitungseinrichtung für ein Fahrzeug mit einem Kapselmagazin, welches in der Mittelkonsole montiert ist, und wobei unterhalb der Vorrichtung ein Becherhalter vorgesehen ist.

Die DE 10 2008 007 254 A1 zeigt eine Kapselespressomaschine für eine am Boden eines Fahrzeugs montierte Box, wobei das Getränk durch einen am Boden des Trinkgefässes verschraubten Extraktionskopf in das Trinkgefäss gedrückt wird. Dieser Extraktionskopf ist lösbar an einer Wasserzuführvorrichtung festlegbar.

Aufgabe der Erfindung ist es daher, eine Vorrichtung zur Zubereitung eines Heißgetränks, insbesondere für ein Fahrzeug, und ein Verfahren zur Zubereitung eines Heißgetränks bereitzustellen, mittels denen die Zubereitung des Heißgetränks vereinfacht wird.

Diese Aufgabe wird durch die Merkmale der unabhängigen Ansprüche gelöst. Bevorzugte Weiterbildungen sind in den Unteransprüchen offenbart.

Gemäß Patentanspruch 1 wird eine Vorrichtung zur Zubereitung eines Heißgetränks, insbesondere für ein Fahrzeug, vorgeschlagen, mit einer Brühkammer, in der ein Portionsbehälter angeordnet werden kann, wobei der Portionsbehälter wenigstens eine Portion einer zu extrahierenden Substanz, insbesondere eines Getränkepulvers, aufweist. Erfindungsgemäß ist wenigstens ein Vorratsbehälter vorgesehen, der mit mehreren Portionsbehältern befüllt werden kann. Zudem ist auch eine Fördereinrichtung vorgesehen, mittels der die mehreren, in dem Vorratsbehälter angeordneten Portionsbehälter nacheinander in die Brühkammer gefördert werden können. Weiters ist eine Behälter-Fixiereinrichtung vorgesehen, mittels der ein Trinkbehälter-Adapterelement lösbar an der Vorrichtung festlegbar ist.

Auf diese Weise wird die Zubereitung des Heißgetränks deutlich vereinfacht, da nun ein Vorratsbehälter vorgesehen ist, der mit mehreren Portionsbehältern befüllt werden kann, Dadurch muss nicht bei jeder Zubereitung eines Heißgetränks ein neuer Portionsbehälter manuell in die Brühkammer eingeführt bzw. nachgeladen werden. Zur Zubereitung eines Heißgetränks wird dann ein in dem Vorratsbehälter angeordneter Portionsbehälter mittels der Fördereinrichtung in die Brühkammer gefördert. Somit kann beispielsweise vor einer Fahrt mit einem Fahrzeug der wenigstens eine Vorratsbehälter aufgefüllt werden. Während der Fahrt muss die Brühkammer dann nicht mehr manuell mit neuen Portionsbehältern bestückt werden, wenn sich der Fahrer des Fahrzeugs ein Heißgetränk zubereiten will.

Die erfindungsgemäße Vorrichtung ist ausdrücklich nicht auf die Zubereitung von Heißgetränken bzw. Getränken beschränkt. So kann mittels der erfindungsgemäßen Vorrichtung jegliche Art von flüssigen Lebensmitteln, beispielsweise auch eine Suppe, zubereitet werden.

In einer bevorzugten Ausgestaltung der erfindungsgemäßen Vorrichtung ist wenigstens eine, vorzugsweise durch eine Person, zum Beispiel den Fahrer, betätigbare, Betätigungseinrichtung, insbesondere ein Taster und/oder ein Schalter, vorgesehen, durch deren Betätigung ein Brühvorgang der Brühkammer aktiviert werden kann. Mittels einer derartigen Betätigungseinrichtung kann eine Person ein Heißgetränk einfach und schnell zubereiten.

Vorzugsweise ist eine Regel- und/oder Steuereinrichtung vorgesehen, mittels der die Fördereinrichtung selbsttätig bzw. automatisch geregelt und/oder gesteuert werden kann. Auf diese Weise wird die Zubereitung des Heißgetränks weiter vereinfacht. Bevorzugt kann mittels der Regel- und/oder Steuereinrichtung erfasst werden, ob in der wenigstens einen Brühkammer ein Portionsbehälter angeordnet ist oder nicht. Sofern in der wenigstens einen Brühkammer kein Portionsbehälter angeordnet ist, steuert die Regel- und/oder Steuereinrichtung die Fördereinrichtung dann selbsttätig derart an, dass die Fördereinrichtung einen Portionsbehälter in die Brühkammer fördert. Dadurch wird die Zubereitung des Heißgetränks noch weiter vereinfacht, da nun stets ein Portionsbehälter selbsttätig in die Brühkammer gefördert wird, wenn sich in der Brühkammer kein Portionsbehälter befindet. So kann das Heißgetränk besonders komfortabel zubereitet werden.

Bevorzugt ist die Regel- und/oder Steuereinrichtung signaltechnisch mit der Betätigungseinrichtung verbunden. Besonders bevorzugt ist dabei vorgesehen, dass, sofern bei einer Betätigung der Betätigungseinrichtung in der Brühkammer kein Portionsbehälter angeordnet ist, die Regel- und/oder Steuereinrichtung die Fördereinrichtung selbsttätig bzw. automatisch derart ansteuert, dass die Fördereinrichtung einen Portionsbehälter in die Brühkammer fördert. Auf diese Weise wird ebenfalls eine besonders einfache und komfortable Zubereitung des Heißgetränks realisiert, da lediglich die Betätigungseinrichtung betätigt werden muss, um einen Portionsbehälter in die Brühkammer zu fördern und anschließend den Brühvorgang zu aktivieren.

Alternativ zu der Regel- und/oder Steuereinrichtung kann auch ein vorzugsweise durch eine Person betätigbares Betätigungselement, insbesondere ein Hebelelement, vorgesehen, sein, mittels der die Fördereinrichtung, insbesondere manuell, betätigt werden kann. Mittels eines derartigen Betätigungselements können die in dem Vorratsbehälter angeordneten Portionsbehälter auf besonders einfache und funktionssichere Weise in die Brühkammer gefördert werden.

Weiter bevorzugt ist eine Auswurfeinrichtung vorgesehen, mittels der ein in der Brühkammer angeordneter Portionsbehälter aus der Brühkammer entfernt und einem Abfallbehälter zugeführt werden kann. Dadurch wird die Zubereitung des Heißgetränks weiter vereinfacht.

Vorzugsweise ist ein durch eine Person betätigbares Betätigungselement, insbesondere ein Hebelelement, vorgesehen, mittels der die Auswurfeinrichtung, insbesondere manuell, betätigt werden kann. Auf diese Weise kann der in der Brühkammer angeordnete Portionsbehälter besonders einfach und zuverlässig aus der Brühkammer entfernt und dem Abfallbehälter zugeführt werden.

Alternativ zu dem Betätigungselement kann auch eine Regel- und/oder Steuereinrichtung vorgesehen sein, mittels der die Auswurfeinrichtung selbsttätig geregelt und/oder gesteuert werden kann. Dadurch kann der Portionsbehälter auf besonders komfortable Weise aus der Brühkammer entfernt und dem Abfallbehälter zugeführt werden. Bevorzugt ist dabei vorgesehen, dass mittels der Regel- und/oder Steuereinrichtung erfasst werden kann, ob in der Brühkammer ein Brühvorgang durchgeführt wird oder nicht. Sofern in der Brühkammer ein Brühvorgang durchgeführt wird, steuert die Regel- und/oder Steuereinrichtung dann, zeitlich gesehen, insbesondere unmittelbar, nach dem Brühvorgang die Auswurfeinrichtung selbsttägig derart an, dass die Auswurfeinrichtung den benutzten Portionsbehälter aus der Brühkammer entfernt und dem Abfallbehälter zuführt. Dadurch wird zuverlässig sichergestellt, dass der benutzte Portionsbehälter nach dem Brühvorgang aus der Brühkammer entfernt und entsorgt wird.

Besonders bevorzugt steuert die Regel- und/oder Steuereinrichtung die Fördereinrichtung, zeitlich gesehen, unmittelbar nach dem Entfernen des Portionsbehälters aus der Brühkammer selbsttätig derart an, dass die Fördereinrichtung einen Portionsbehälter in die Brühkammer fördert. Auf diese Weise wird sichergestellt, dass nach dem Entfernen eines benutzten Portionsbehälters stets ein neuer Portionsbehälter in die Brühkammer gefördert wird.

In einer weiteren bevorzugten Ausgestaltung der erfindungsgemäßen Vorrichtung weist die Fördereinrichtung ein zwischen einer Aufnahmeposition und einer Brühposition verlagerbares Transportelement auf, wobei in der Aufnahmeposition ein Portionsbehälter aus dem Vorratsbehälter mittels des Transportelements aufgenommen werden kann, und wobei durch Verlagerung des Transportelements von der Aufnahmeposition in die Brühposition der mittels des Transportelements aufgenommenen Portionsbehälter in der Brühkammer angeordnet werden kann. Mittels eines derartigen Transportelements kann der Portionsbehälter einfach und zuverlässig von dem Vorratsbehälter in die Brühkammer gefördert werden. Bevorzugt ist dabei vorgesehen, das durch Verlagerung des Transportelements von der Brühposition zurück in die Aufnahmeposition der in der Brühkammer angeordnete Portionsbehälter aus der Brühkammer entfernt und einem Abfallbehälter zugeführt werden kann. So kann der Portionsbehälter besonders einfach und zuverlässig aus der Brühkammer entfernt und dem Abfallbehälter zugeführt werden. Das Transportelement kann hier dann auch die Auswurfeinrichtung ausbilden.

Vorzugsweise ist das Transportelement, in Hochachsenrichtung gesehen, unterhalb des Vorratsbehälters angeordnet, um den Portionsbehälter auf besonders einfache Weise bzw. mit besonders geringem Aufwand mit dem Transportelement aufnehmen zu können. Konkret kann das Transportelement zumindest bereichsweise U-Profil-förmig ausgebildet, wobei zur Aufnahme des Portionsbehälters der Portionsbehälter in dem Profilraum des U-Profilförmigen Transportelements angeordnet werden kann. Ein derart ausgebildetes Transportelement ist besonders einfach herzustellen bzw. kostengünstig.

In einer bevorzugten konkreten Ausführungsform weist der wenigstens eine Vorratsbehälter wenigstens eine zylinderförmige Ausnehmung auf, in der mehrere Portionsbehälter angeordnet werden können, wobei die in der zylinderförmigen Ausnehmung angeordneten Portionsbehälter, in Zylinder-Hochrichtung gesehen, hintereinander angeordnet sind. So ist der Vorratsbehälter besonders einfach und funktionssicher ausgebildet. Besonders bevorzugt ist dabei vorgesehen, dass der Vorratsbehälter rohrförmig und/oder revolvertrommelartig ausgebildet ist.

Weiter bevorzugt ist ein die zylinderförmige Ausnehmung begrenzender Wandbereich konturangepasst zu einem Außenwandbereich der Portionsbehälter ausgebildet, um mittels des Wandbereichs eine Führung für die in der zylinderförmigen Ausnehmung angeordneten Portionsbehälter zu bilden. Weiter bevorzugt weisen die in der zylinderförmigen Ausnehmung angeordneten Portionsbehälter einen definierten Spaltabstand zu einem die zylinderförmige Ausnehmung begrenzenden Wandbereich auf, um die Förderung der in der zylinderförmigen Ausnehmung angeordneten Portionsbehälter in die Brühkammer zuverlässig sicherzustellen.

Vorzugsweise ist der Vorratsbehälter derart ausgerichtet, dass die in der zylinderförmigen Ausnehmung angeordneten Portionsbehälter schwerkraftbedingt, in Zylinder-Hochrichtung gesehen, nach unten fallen. Auf diese Weise können die in dem Vorratsbehälter angeordneten Portionsbehälter besonders einfach in die Brühkammer gefördert werden.

Weiter bevorzugt umgreift der Vorratsbehälter eine die Brühkammer aufweisende, insbesondere kreiszylinderförmige, Zubereitungseinrichtung, insbesondere mit einem definierten Spaltabstand, zumindest bereichsweise ringförmig, wobei der Vorratsbehälter einen sich in Ring-Umfangsrichtung erstreckenden, ringförmigen Hohlraum aufweist, in dem mehrere Portionsbehälter angeordnet werden können, und wobei zur Förderung der in dem Vorratsbehälter angeordneten Portionsbehälter in die Brühkammer der Vorratsbehälter relativ zu der Zubereitungseinrichtung in Ring-Umfangsrichtung verdreht werden kann. Auf diese Weise können die in dem Vorratsbehälter angeordneten Portionsbehälter einfach und funktionssicher in die Brühkammer gefördert werden.

Vorzugsweise ist in dem Hohlraum des Vorratsbehälters wenigstens ein Federelement angeordnet, das die in dem Vorratsbehälter angeordneten Portionsbehälter in Förderrichtung vorspannt, um die Förderung der in dem Hohlraum angeordneten Portionsbehälter in die Brühkammer zuverlässig sicherzustellen. Weiter bevorzugt weist die Zubereitungseinrichtung wenigstens ein in den Hohlraum des Vorratsbehälters hineinragendes Leitelement auf, mittels dem die in dem Hohlraum angeordneten Portionsbehälter in Richtung der Brühkammer der Zubereitungseinrichtung geleitet und/oder gefördert werden können, um die Zuverlässigkeit der Förderung der in dem Hohlraum angeordneten Portionsbehälter in die Brühkammer weiter zu erhöhen.

Bevorzugt ist eine Fixiereinrichtung vorgesehen, mittels der die Vorrichtung lösbar festgelegt werden kann. Auf diese Weise kann die Vorrichtung beispielsweise im Inneren eines Fahrzeugs an dem Fahrzeug festgelegt werden. Dadurch wird sichergestellt, dass die Vorrichtung auch während einer Fahrt mit dem Fahrzeug an der für sie vorgesehenen Position verbleibt. Ist ein Service oder eine Reparatur der Vorrichtung erforderlich, kann die Vorrichtung dann einfach aus dem Fahrzeug entfernt werden. Vorzugsweise ist wenigstens ein lösbar an einem Grundkörper der Vorrichtung festgelegter Flüssigkeitsbehälter, insbesondere ein Wassertank, vorgesehen, um den Aufbau und die Handhabung der Vorrichtung zu vereinfachen.

Erfindungsgemäß ist eine Behälter-Fixiereinrichtung vorgesehen, mittels der ein Trinkbehälter und/oder ein Trinkbehälter-Adapter lösbar an der Vorrichtung festgelegt werden kann. Mittels einer derartigen Behälter-Fixiereinrichtung wird zuverlässig verhindert, dass der Trinkbehälter während einer Zubereitung eines Heißgetränks und/oder während einer Fahrt mit dem Fahrzeug umkippt.

Zur Lösung der bereits genannten Aufgabe wird ferner ein Verfahren zur Zubereitung eines Heißgetränks vorgeschlagen, mit einer Brühkammer, in der ein Portionsbehälter angeordnet werden kann, wobei der Portionsbehälter wenigstens eine Portion einer zu extrahierenden Substanz, insbesondere eines Getränkepulvers, aufweist. Erfindungsgemäß ist wenigstens ein Vorratsbehälter vorgesehen, der mit mehreren Portionsbehältern befüllt werden kann. Zudem ist auch eine Fördereinrichtung vorgesehen, mittels der die mehreren in dem Vorratsbehälter angeordneten Portionsbehälter nacheinander in die Brühkammer gefördert werden.

Weiters ist eine Behälter-Fixiereinrichtung vorgesehen, mittels der ein Trinkbehälter-Adapterelement lösbar an der Vorrichtung festlegbar ist.

Die sich durch die erfindungsgemäße Verfahrensführung ergebenden Vorteile sind identisch mit den bereits gewürdigten Vorteilen der erfindungsgemäßen Vorrichtung, so dass an dieser Stelle nicht wiederholt werden.

Des Weiteren wird auch ein Fahrzeug, insbesondere ein Nutzfahrzeug, mit der erfindungsgemäßen Vorrichtung und/oder zur Durchführung des erfindungsgemäßen Verfahrens beansprucht. Die sich hieraus ergebenden Vorteile sind ebenfalls identisch mit den Vorteilen der erfindungsgemäßen Vorrichtung, so dass diese an dieser Stelle ebenfalls nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Perspektivdarstellung eine erste Ausführungsform einer erfindungsgemäßen Vorrichtung;
- Fig. 2: die Vorrichtung in einer Ansicht von vorne;
- Fig. 3: die Vorrichtung in einer Seitenansicht;

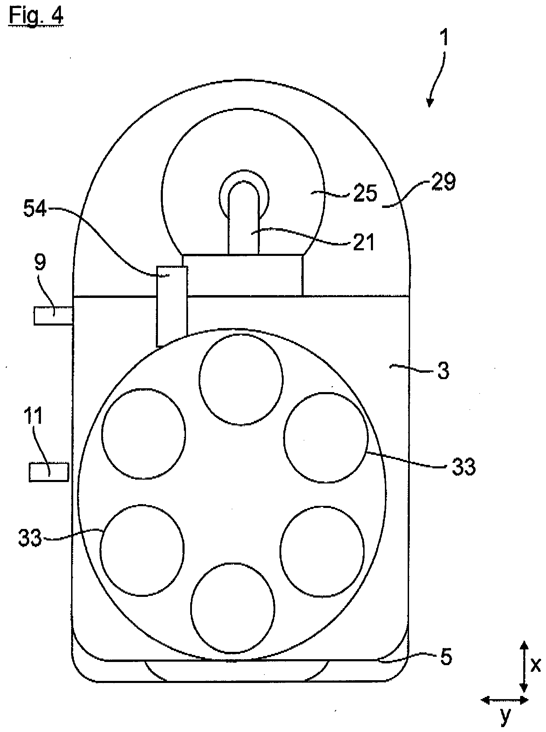

- Fig. 4: die Vorrichtung in einer Ansicht von oben;
- Fig. 5: in einer schematischen Perspektivdarstellung eine Förder- und Auswurfeinrichtung der Vorrichtung;
- Fig. 6: in einer Seitenansicht die Förder- und Auswurfeinrichtung in einer Aufnahmestellung;
- Fig. 7: in einer Darstellung gemäß Fig. 6 die Förder- und Auswurfeinrichtung in einer Brühstellung;
- Fig. 8: in einer Darstellung gemäß Fig. 6 die Förder- und Auswurfeinrichtung in der Aufnahmestellung;
- Fig. 9: in einer schematischen Perspektivdarstellung eine zweite Ausführungsform der erfindungsgemäßen Vorrichtung; und
- Fig. 10: einen Schnitt entlang der Ebene A-A aus Fig. 9

In Fig, 1 ist eine erfindungsgemäße Vorrichtung 1 zur Zubereitung eines Heißgetränks gezeigt. Die Vorrichtung 1 weist einen Grundkörper 3 auf, an dem ein hier beispielhaft als Wassertank 5 ausgebildeter Flüssigkeitsbehälter der Vorrichtung 1 lösbar festgelegt ist. Der Wassertank 5 ist derart ausgebildet, dass er im vom Grundkörper 3 gelösten Zustand mit Wasser befüllt werden kann. Der Grundkörper 3 weist hier eine Fixiereinrichtung 7 auf, mittels der die Vorrichtung 1 lösbar festgelegt werden kann. Auf diese Weise kann die Vorrichtung 1 beispielsweise im Inneren eines Fahrzeugs, insbesondere eines Nutzfahrzeugs, an einer definierten Position mittels der Fixiereinrichtung 7 festgelegt werden. Die Vorrichtung 1 ist dann ortsfest bzw. stationär an dem Fahrzeug festgelegt und kann während einer Fahrt mit dem Fahrzeug nicht umkippen bzw. nicht aufgrund fahrdynamischer Einflüsse verlagert werden. Die Fixiereinrichtung 7 ist hier, in Hochrichtung z gesehen, unten an dem Grundkörper 3 der Vorrichtung angeordnet und weist, hier lediglich beispielhaft, mehrere, hier beispielhaft zwei, Stabelemente 9, 11 auf.

Jedes Stabelement 9, 11 ist hier mit einem definierten Spaltabstand in einer sich in Querrichtung y erstreckenden Ausnehmung 13 des Grundkörpers 3 geführt und ragt mit einem Endbereich 14 aus der Ausnehmung 13 heraus. Die Ausnehmungen 13 sind hier in Längsrichtung x voneinander beabstandet an dem Grundkörper 3 angeordnet. Die in der Ausnehmung angeordneten Stabelemente 9, 11 können in Querrichtung y relativ zu dem Grundkörper 3 verlagert werden. Durch die Verlagerung der Stabelemente 9, 11 relativ zu dem Grundkörper 3 kann die Verbindung zwischen der Vorrichtung 1 und einem in den Figuren nicht gezeigten Befestigungskörper, beispielsweise einer Konsole eines Fahrzeugs, hergestellt und gelöst werden.

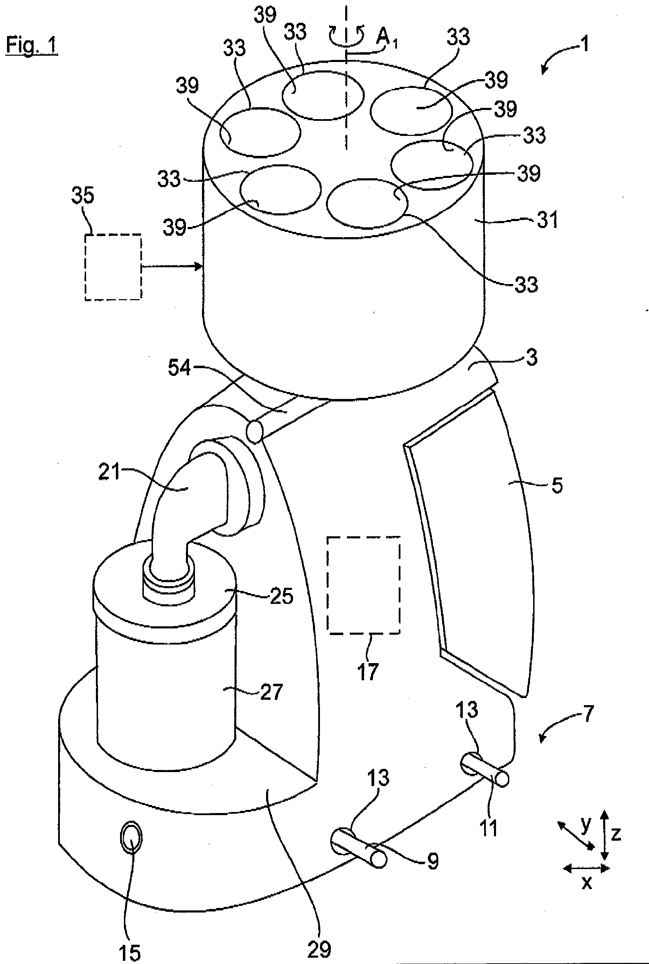

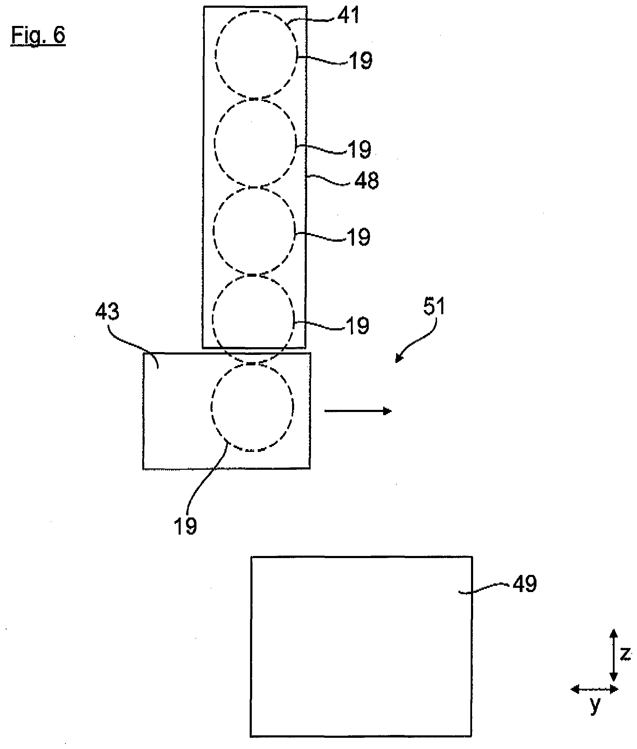

Wie in Fig. 1 weiter gezeigt ist, weist die Vorrichtung 1 hier beispielhaft auch eine durch einen Schalter 13 gebildete, durch eine Person betätigbare Betätigungseinrichtung auf, durch deren Betätigung ein Brühvorgang in einer in Fig. 1 mit gestrichelten Linien angedeuteten Brühkammer 17 der Vorrichtung 1 aktiviert werden kann. In der Brühkammer 17 kann ein Portionsbehälter 19 (Fig. 6) angeordnet werden, der wenigstens eine Portion einer zu extrahierenden Substanz aufweist. Durch Aktivierung der Brühkammer 17 wird die Substanz extrahiert bzw. mittels des Wassers aus dem Wassertank 5 aufgebrüht und das Heißgetränk zubereitet. Das zubereitete Heißgetränk wird dann über einen Ausguss 21 der Vorrichtung 1 aus der Vorrichtung 1 herausgefördert.

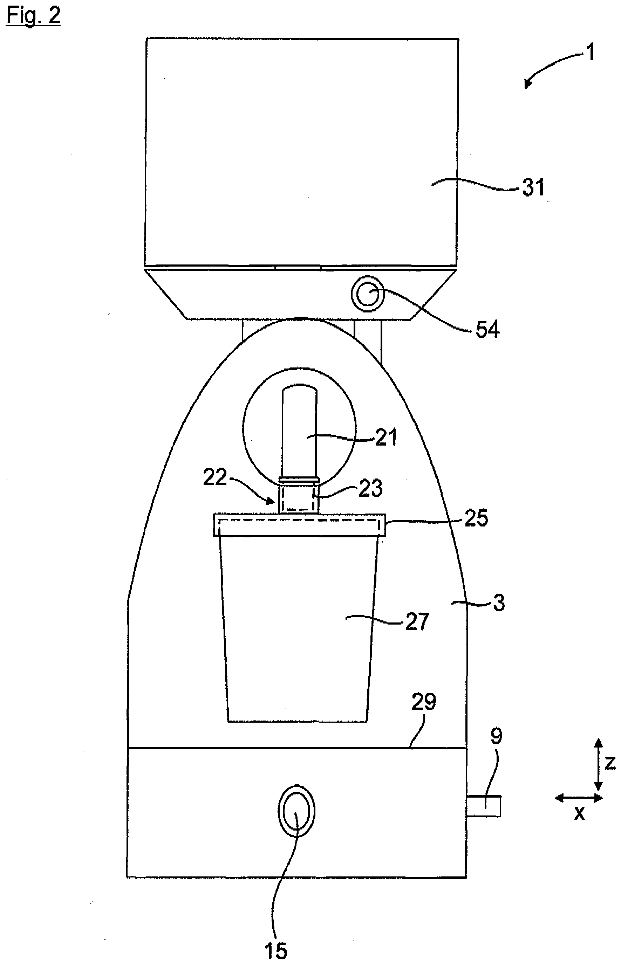

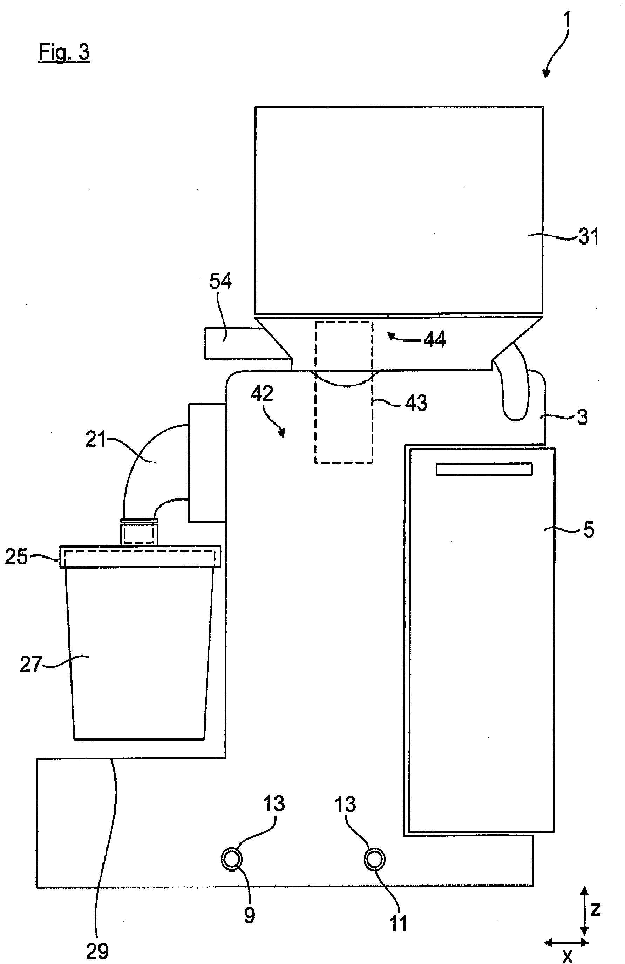

Gemäß Fig. 2 und 3 weist der Ausguss 21 hier beispielhaft an einer Mündungsöffnung 22 auch eine Behälter-Fixiereinrichtung 23 auf, an der ein Trinkbehälter-Adapterelement 25 lösbar festgelegt werden kann. Mittels des Trinkbehälter-Adapterelements 25 kann ein Trinkbehälter 27 an dem Ausguss 21 festgelegt werden. Im festgelegten Zustand des Trinkbehälters 27 fließt dann das aus dem Ausguss 21 strömende Heißgetränk in den Trinkbehälter 27. Die lösbare Festlegung des Trinkbehälter-Adapterelements 25 an der Behälter-Fixiereinrichtung 23 erfolgt hier beispielhaft mittels einer Steckverbindung. Die lösbare Festlegung des Trinkbehälter-Adapterelements 25 an dem Trinkbehälter 27 erfolgt hier ebenfalls mittels einer Steckverbindung. Des Weiteren weist der Grundkörper 3 der Vorrichtung 1 hier beispielhaft auch einen, eine Abstellfläche bildende Abstellwandbereich 29 auf, auf dem der Trinkbehälter 27 für dessen Befüllung mit dem Heißgetränk abgestellt werden kann.

Wie in Fig. 1 weiter gezeigt ist, weist die Vorrichtung 1 auch einen hier beispielhaft revolvertrommelartig ausgebildeten Vorratsbehälter 31 auf, der mit mehreren Portionsbehältern 19 befüllt werden kann. Der revolvertrommelartige Vorratsbehälter 31 ist hier, in Hochrichtung z gesehen, oberhalb des Grundkörpers 3 angeordnet und axial verdrehbar um eine Drehachse A₁ an dem Grundkörper 3 festgelegt. Die Drehachse A₁ ist hier dabei in Hochrichtung z ausgerichtet. Die Verdrehung des Vorratsbehälters 31 relativ zu dem Grundkörper 3 erfolgt hier beispielhaft manuell. Alternativ wäre es beispielsweise aber auch möglich, die Verdrehung des Vorratsbehälters 33 selbsttätig mittels einer in Fig. 1 mit gestrichelten Linien angedeuteten Regel- und/oder Steuereinrichtung 35 selbsttätig zu regeln bzw. zu steuern.

Gemäß Fig. 1 weist der Vorratsbehälter 31 mehrere, hier beispielhaft zylinderförmige Ausnehmungen 33 auf. Die Ausnehmungen 33 sind hier beispielhaft in Umfangsrichtung verteilt radial außen an dem revolvertrommelartigen Vorratsbehälter 31 angeordnet. Zudem erstreckt sich jede Ausnehmung 33 hier in Hochrichtung z durchgängig durch den gesamten Vorratsbehälter 31. In jeder Ausnehmung 33 können hier beispielhaft mehrere Portionsbehälter 19 angeordnet werden, dergestalt, dass die in der jeweiligen Ausnehmung 33 angeordneten Portionsbehälter 19, in Hochrichtung z gesehen, hintereinander angeordnet sind.

Des Weiteren sind hier Wandbereiche 39 des Vorratsbehälters 31, die die zylinderförmigen Ausnehmungen 33 begrenzen, konturangepasst zu einem radial äußeren Wandbereich 41 (Fig. 6) der hier rotationssymmetrisch ausgebildeten Portionsbehälter 19 ausgebildet. Zudem sind die Ausnehmungen 33 hier derart ausgebildet, dass die in den Ausnehmungen 33 angeordneten Portionsbehälter 19 einen definierten Spaltabstand zu den Wandbereichen 39 aufweisen. Auf diese Weise werden die in den Ausnehmungen 33 angeordneten Portionsbehälter 19 in Zylinder-Hochrichtung geführt.

Alternativ zu dem revolvertrommelartigen Vorratsbehälter 31 könnte an der Vorrichtung 1 beispielsweise auch ein in den Figuren nicht gezeigter, rohrförmiger Vorratsbehälter vorgesehen sein, der eine einzige zylinderförmige Ausnehmung aufweist.

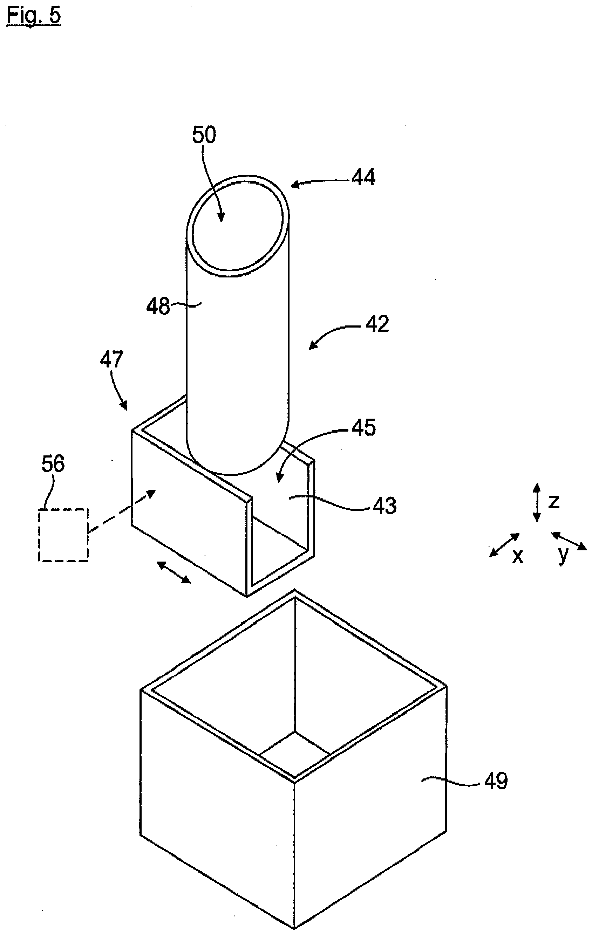

Wie in Fig. 5 gezeigt ist, weist die Vorrichtung 1 hier weiter auch ein in Querrichtung y verlagerbares Transportelement 43 auf. Das verlagerbare Transportelement 43 ist im Inneren des Grundkörpers 3 angeordnet und hier beispielhaft U-Profil-artig ausgebildet. Der U-Profil-förmige Querschnitt des Transportelements 43 erstreckt sich hier in Querrichtung y. Ein Profilraum 45 des Transportelements 43 ist hier, in Hochrichtung z gesehen, nach oben offen und, in Querrichtung y gesehen, an einem Endbereich 47 des Transportelements 43 geschlossen. Des Weiteren ist das Transportelement 43 hier beispielhaft, in Hochrichtung z gesehen, oberhalb eines im Inneren des Grundkörpers 3 angeordneten Abfallbehälters 49 angeordnet. Zudem ist das Transportelement 43 hier beispielhaft auch, in Hochrichtung z gesehen unterhalb eines Verbindungsrohrs 48 der Vorrichtung 1 angeordnet.

Gemäß Fig. 3 ist das Verbindungsrohr 48 in Hochrichtung z ausgerichtet und mit einem, in Hochrichtung z gesehen, unteren Bereich 42 im Inneren des Grundkörpers 3 angeordnet. Zudem ist eine, in Hochrichtung z gesehen, obere Mündungsöffnung 44 des Verbindungsrohrs 48 freigelegt. Das Verbindungsrohr 48 ist dabei derart an dem Grundkörper 3 angeordnet, dass ein Hohlraum 50 (Fig. 5) des Verbindungsrohrs 48 bei definierten Drehstellungen des Vorratsbehälters 31 mit den Ausnehmungen 33 des Vorratsbehälters 31 fluchtet. Fluchtet der Hohlraum 50 mit einer Ausnehmung 33 fallen die in der Ausnehmung 33 angeordneten Portionsbehälter 19 schwerkraftbedingt in den Hohlraum 50 des Verbindungsrohrs 48.

Das Transportelement 43 bildet hier eine Förder- und Auswurfeinrichtung der Vorrichtung 1 aus. Die Funktionsweise dieser Förder- und Auswurfeinrichtung wird nachfolgend anhand der Fig. 6 bis 8 näher erläutert:

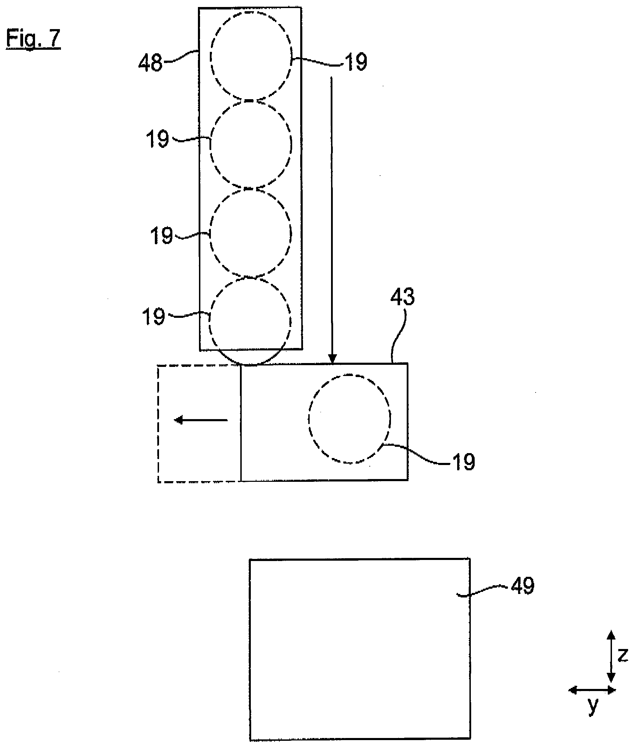

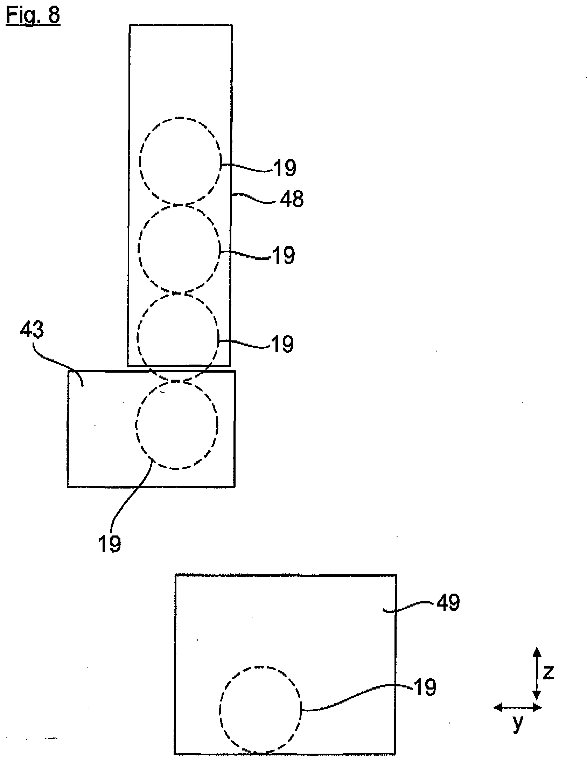

In Fig. 6 ist das Transportelement 43 in einer Aufnahmeposition 51 angeordnet. In dieser Aufnahmeposition 51 fluchtet der Hohlraum 50 des Verbindungsrohrs 48 mit dem Profilraum 45 des Transportelements 43. Auf diese Weise kann ein in dem Hohlraum 50 des Verbindungsrohrs 48 angeordneter Portionsbehälter 19 schwerkraftbedingt, in Hochrichtung z gesehen, nach unten in den leeren Profilraum 45 des Transportelements 43 fallen. Der Profilraum 45 des Transportelements 43 ist hier derart ausgebildet, dass lediglich ein einziger Portionsbehälter 19 in dem Profilraum 45 angeordnet werden kann. In der Aufnahmeposition 51 wird hier somit ein Portionsbehälter 19 mittels des Transportelements 43 aufgenommen. Anschließend wird das Transportelement 43 hier beispielhaft in Querrichtung y in eine Fig. 7 gezeigte Brühposition 53 verlagert. In dieser Brühposition 53 ist der mittels des Transportelements 43 aufgenommene Portionsbehälter 19 in der Brühkammer 17 der Vorrichtung 1 angeordnet. Dann kann die Brühkammer 17 aktiviert und ein Heißgetränk zubereitet werden. Nach der Zubereitung des Heißgetränks wird das Transportelement 43 wieder in die Aufnahmeposition 51 verlagert. Durch diese Verlagerung zurück in die Aufnahmeposition 51 wird hier der in der Brühkammer 17 angeordnete Portionsbehälter 19 aus der Brühkammer 17 entfernt und dem Abfallbehälter 49 zugeführt. In der Aufnahmeposition 51 des Transportelements 43 wieder dann gemäß Fig. 8 wieder ein Portionsbehälter 19 mittels des Transportelements 43 aufgenommen.

Des Weiteren wird das Transportelement 43 hier beispielhaft mittels eines Hebels 54 verlagert. Der Hebel 54 (Fig. 1) ermöglicht hier eine Einhandbetätigung des Transportelements 43. Alternativ zu dem Hebel 54 könnte die Verlagerung des Transportelements 43 aber auch mittels einer in Fig. 5 mit gestrichelten Linien angedeuteten Regel- und/oder Steuereinrichtung 56 selbsttätig geregelt und/oder gesteuert werden.

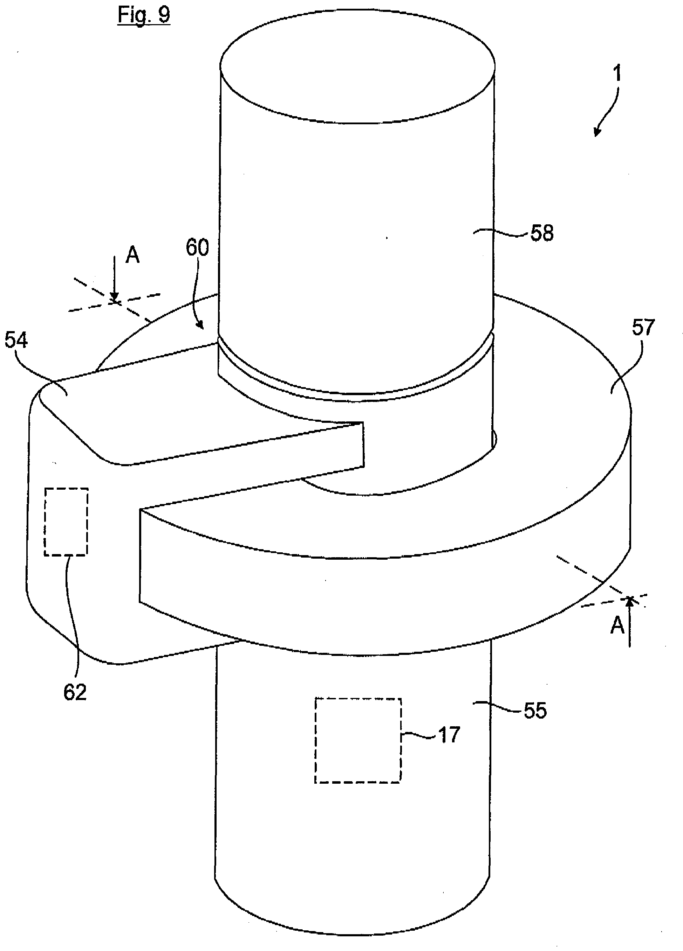

In Fig. 9 ist eine zweite Ausführungsform der erfindungsgemäßen Vorrichtung 1 gezeigt. Die zweite Ausführungsform der Vorrichtung 1 weist eine die Brühkammer 17 aufweisende Zubereitungseinrichtung 55 auf, die hier beispielhaft kreiszylinderförmig ausgebildet ist. An dieser zylinderförmigen Zubereitungseinrichtung 55 Ist ein hier beispielhaft als Wassertank 58 ausgebildeter Flüssigkeitsbehälter der Vorrichtung 1 lösbar festgelegt. Der Wassertank 58 ist hier ebenfalls kreiszylinderförmig ausgebildet und, in Hochrichtung z gesehen, oberhalb der Zubereitungseinrichtung 55 angeordnet. Zudem sind, in Draufsicht auf die Vorrichtung 1 gesehen, eine radiale Außenwand des Wassertanks 58 und eine radiale Außenwand der Zubereitungseinrichtung 55 hier zueinander fluchtend.

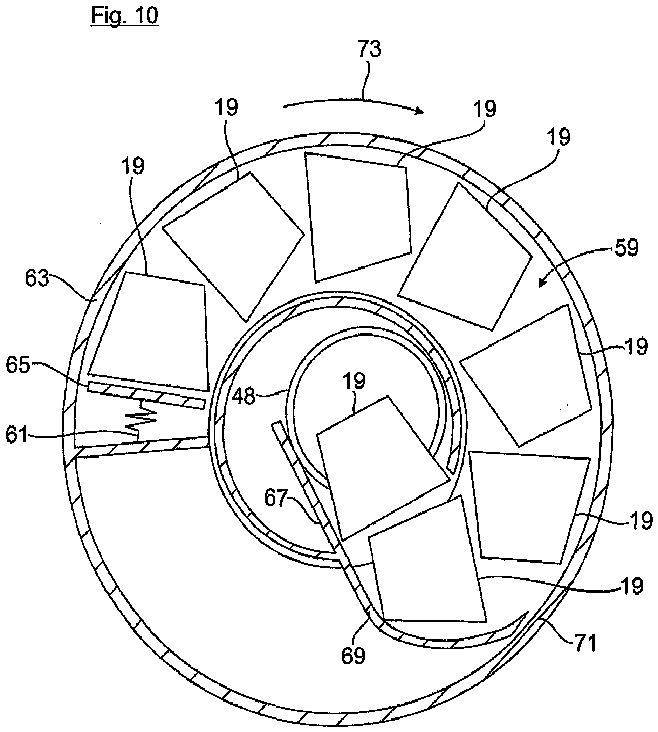

Des Weiteren weist die zweite Ausführungsform der erfindungsgemäßen Vorrichtung 1 auch einen Vorratsbehälter 57 auf. Der Vorratsbehälter 57 umgreift die kreiszylinderförmige Zubereitungseinrichtung 55 ringförmig mit einem definierten Spaltabstand. Zur Festlegung des Vorratsbehälters 57 an der Vorrichtung 1 weist die Vorrichtung 1 hier beispielhaft ein im Querschnitt U-Profil-förmiges Fixierelement 52 auf, das mit seinen freien Endbereichen 60 an der Zubereitungseinrichtung 55 festgelegt ist und den Vorratsbehälter 57 mit einem definierten Spaltabstand umgreift. Weiter weist der Vorratsbehälter 57 einen sich in Ring-Umfangsrichtung erstreckenden, ringförmigen Hohlraum 59 (Fig. 10) auf, in dem mehrere Portionsbehälter 19 angeordnet werden können. Zur Förderung der in dem Vorratsbehälter 57 angeordneten Portionsbehälter 19 in die Brühkammer 17 kann der Vorratsbehälter 57 relativ zu der Zubereitungseinrichtung 55 in Ring-Umfangsrichtung verdreht werden. Die Verdrehung des Vorratsbehälters 57 relativ zu der Zubereitungseinrichtung 55 erfolgt hier beispielhaft manuell. Alternativ könnte die Verdrehung des Vorratsbehälters 57 aber auch mittels einer in Fig. 9 mit gestrichelten Linien angedeuteten Regel- und/oder Steuereinrichtung 62 selbsttätig geregelt und/oder gesteuert werden.

Wie in Fig. 10 gezeigt ist, weist der Vorratsbehälter 57 hier beispielhaft ein in dem Hohlraum 59 des Vorratsbehälters 57 angeordnetes Federelement 61 auf. Das Federelement 61 ist an einem Endbereich an einem Gehäuse 63 des Vorratsbehälters 57 festgelegt. An seinem anderen Endbereich ist das Federelement 61 an einem relativ zu dem Gehäuse 63 des Vorratsbehälters 57 verlagerbaren, in dem Hohlraum 59 des Vorratsbehälters 57 angeordneten Schieberelement 65 festgelegt. Das Schieberelement 65 ist hier beispielhaft plattenförmig ausgebildet. Mittels des Schieberelements 65 werden die in dem Hohlraum 59 des Vorratsbehälters 57 angeordneten Portionsbehälter 19 in Förderrichtung bzw. in Richtung der Brühkammer 17 vorgespannt.

Gemäß Fig. 10 weist die Zubereitungseinrichtung 55 hier weiter auch ein in den Hohlraum 59 des Vorratsbehälters 57 hineinragendes Leitelement 67 auf, mittels dem die in dem Hohlraum angeordneten Portionsbehälter in Richtung der Brühkammer 17 geleitet bzw. gefördert werden. Ein in den Hohlraum 59 hineinragender Bereich 69 des Leitelements 67 erstreckt sich hier dabei bis hin zu einem radial äußeren Gehäusewandbereich 71 des Vorratsbehälters 57. Zudem ist der in den Hohlraum 59 hineinragende Bereich 69 hier beispielhaft entgegen einer Drehrichtung 73 des Vorratsbehälters 57 gekrümmt.

### Bezugszeichenliste

- 1: Vorrichtung
- 3: Grundkörper
- 5: Wassertank
- 7: Fixiereinrichtung
- 9: Stabelement
- 11: Stabelement
- 13: Ausnehmung
- 15: Schalter
- 17: Brühkammer
- 19: Portionsbehälter
- 21: Ausguss
- 22: Mündungsöffnung
- 23: Behälter-Fixiereinrichtung
- 25: Trinkbehälter-Adapterelement
- 27: Trinkbehälter
- 29: Abstellwandbereich
- 31: Vorratsbehälter
- 33: Ausnehmung
- 35: Regel- und/oder Steuereinrichtung
- 39: Wandbereich
- 41: Wandbereich
- 42: unterer Bereich
- 43: Transportelement
- 44: Mündungsöffnung
- 45: Profilraum
- 47: Endbereich
- 48: Verbindungsrohr
- 49: Abfallbehälter
- 50: Hohlraum
- 51: Aufnahmeposition
- 52: Fixierelement
- 53: Brühposition
- 54: Hebel
- 55: Zubereitungseinrichtung
- 56: Regel- und/oder Steuereinrichtung
- 57: Vorratsbehälter
- 58: Wassertank
- 59: Hohlraum
- 60: Endbereich
- 61: Federelement
- 62: Regel- und/oder Steuereinrichtung
- 63: Gehäuse
- 65: Schieberelement
- 67: Leitelement
- 69: Bereich
- 71: Gehäusewandbereich
- 73: Drehrichtung

## Patentansprüche

1. Vorrichtung zur Zubereitung eines Heißgetränks, insbesondere für ein Fahrzeug, mit einer Brühkammer (17), in der ein Portionsbehälter (19) anordenbar ist, wobei der Portionsbehälter (19) wenigstens eine Portion einer zu extrahierenden Substanz aufweist, wobei wenigstens ein Vorratsbehälter (31; 57) vorgesehen ist, der mit mehreren Portionsbehältern (19) befüllbar ist, wobei eine Fördereinrichtung (43) vorgesehen ist, mittels der die mehreren in dem Vorratsbehälter (31; 57) angeordneten Portionsbehälter (19) nacheinander in die Brühkammer (17) förderbar sind, **dadurch gekennzeichnet, dass** eine Behälter-Fixiereinrichtung (23) vorgesehen ist, mittels der ein Trinkbehälter-Adapterelement (25) lösbar an der Vorrichtung (1) festlegbar ist.

2. Vorrichtung nach Anspruch 1, **dadurch gekennzeichnet, dass** wenigstens eine, vorzugsweise durch eine Person betätigbare, Betätigungseinrichtung (15), insbesondere ein Taster und/oder ein Schalter, vorgesehen ist, durch deren Betätigung ein Brühvorgang der Brühkammer (17) aktivierbar ist.

3. Vorrichtung nach Anspruch 1 oder 2, **dadurch gekennzeichnet, dass** eine Regel- und/oder Steuereinrichtung (56) vorgesehen ist, mittels der die Fördereinrichtung (43) selbsttätig regelbar und/oder steuerbar ist, wobei bevorzugt vorgesehen ist, dass mittels der Regel- und/oder Steuereinrichtung (56) erfassbar ist, ob in der Brühkammer (17) ein Portionsbehälter (19) angeordnet ist oder nicht, wobei, sofern in der Brühkammer (17) kein Portionsbehälter (19) angeordnet ist, die Regel- und/oder Steuereinrichtung (56) die Fördereinrichtung (43) selbsttätig derart ansteuert, dass die Fördereinrichtung (43) einen Portionsbehälter (19) in die Brühkammer (17) fördert.

4. Vorrichtung nach Anspruch 2 und 3, **dadurch gekennzeichnet, dass** die Regel- und/oder Steuereinrichtung (56) signaltechnisch mit der Betätigungseinrichtung (15) verbunden ist, wobei bevorzugt vorgesehen ist, dass, sofern bei einer Betätigung der Betätigungseinrichtung (15) in der Brühkammer (17) kein Portionsbehälter (19) angeordnet ist, die Regel- und/oder Steuereinrichtung (56) die Fördereinrichtung (43) selbsttätig derart ansteuert, dass die Fördereinrichtung (43) einen Portionsbehälter (19) in die Brühkammer (17) fördert.

5. Vorrichtung nach Anspruch 1 oder 2, **dadurch gekennzeichnet, dass** ein, vorzugsweise durch eine Person betätigbares, Betätigungselement (54), insbesondere ein Hebelelement, vorgesehen ist, mittels der die Fördereinrichtung (43), insbesondere manuell, betätigbar ist.

6. Vorrichtung nach einem der vorhergehenden Ansprüche, **dadurch gekennzeichnet, dass** eine Auswurfeinrichtung (43) vorgesehen ist, mittels ein der in der Brühkammer (17) angeordneter Portionsbehälter (19) aus der Brühkammer (17) entfernbar und einem Abfallbehälter (49) zuführbar ist.

7. Vorrichtung nach Anspruch 6, **dadurch gekennzeichnet, dass** ein, vorzugsweise durch eine Person betätigbares, Betätigungselement (54), insbesondere ein Hebelelement, vorgesehen ist, mittels der die Auswurfeinrichtung (43), insbesondere manuell, betätigbar ist.

8. Vorrichtung nach Anspruch 6, **dadurch gekennzeichnet, dass** eine Regel- und/oder Steuereinrichtung (56) vorgesehen ist, mittels der die Auswurfeinrichtung (43) selbsttätig regelbar und/oder steuerbar ist, wobei bevorzugt vorgesehen ist, dass mittels der Regel- und/oder Steuereinrichtung (56) erfassbar ist, ob in der Brühkammer (17) ein Brühvorgang durchgeführt wird oder nicht, wobei, sofern in der Brühkammer (17) ein Brühvorgang durchgeführt wird, die Regel- und/oder Steuereinrichtung (56), zeitlich gesehen, insbesondere unmittelbar, nach dem Brühvorgang die Auswurfeinrichtung (43) selbsttätig derart ansteuert, dass die Auswurfeinrichtung (43) den Portionsbehälter (19) aus der Brühkammer (17) entfernt und dem Abfallbehälter (49) zuführt.

9. Vorrichtung nach Anspruch 8, **dadurch gekennzeichnet, dass**, zeitlich gesehen, unmittelbar nach dem Entfernen des Portionsbehälters (19) aus der Brühkammer (17) die Regel- und/oder Steuereinrichtung (56) die Fördereinrichtung (43) selbsttätig derart ansteuert, dass die Fördereinrichtung (43) einen Portionsbehälter (19) in die Brühkammer (17) fördert.

10. Vorrichtung nach einem der vorhergehende Ansprüche, **dadurch gekennzeichnet, dass** die Fördereinrichtung ein zwischen einer Aufnahmeposition (51) und einer Brühposition (53) verlagerbares Transportelement (43) aufweist, wobei in der Aufnahmeposition (51) ein Portionsbehälter (19) aus dem Vorratsbehälter (31; 57) mittels des Transportelements (43) aufnehmbar ist, und wobei durch Verlagerung des Transportelements (43) von der Aufnahmeposition (51) in die Brühposition (53) der mittels des Transportelements (43) aufgenommene Portionsbehälter (19) in der Brühkammer (17) anordenbar ist, wobei bevorzugt vorgesehen ist, dass durch Verlagerung des Transportelements (43) von der Brühposition (53) zurück in die Aufnahmeposition (51) der in der Brühkammer (17) angeordnete Portionsbehälter (19) aus der Brühkammer (17) entfernbar und einem Abfallbehälter (49) zuführbar ist.

11. Vorrichtung nach einem der vorhergehenden Ansprüche, **dadurch gekennzeichnet, dass** der wenigstens eine Vorratsbehälter (31) wenigstens eine zylinderförmige Ausnehmung (33) aufweist, in der mehrere Portionsbehälter (19) anordenbar sind, wobei die in der Ausnehmung (33) angeordneten Portionsbehälter (19), in Zylinder-Hochrichtung gesehen, hintereinander angeordnet sind, wobei bevorzugt vorgesehen ist, dass der Vorratsbehälter (31) zylinderförmig und/oder revolvertrommelartig ausgebildet ist.

12. Vorrichtung nach einem der Ansprüche 1 bis 10, **dadurch gekennzeichnet, dass** der Vorratsbehälter (57) eine die Brühkammer (17) aufweisende, insbesondere kreiszylinderförmige, Zubereitungseinrichtung (55), insbesondere mit einem definierten Spaltabstand, zumindest bereichsweise ringförmig umgreift, wobei der Vorratsbehälter (57) einen sich in Ring-Umfangsrichtung erstreckenden, ringförmigen Hohlraum (59) aufweist, in dem mehrere Portionsbehälter (19) anordenbar sind, und wobei zur Förderung der in dem Vorratsbehälter (57) angeordneten Portionsbehälter (19) in die Brühkammer (17) der Vorratsbehälter (57) relativ zu der Zubereitungseinrichtung (55) in Ring-Umfangsrichtung verdrehbar ist.

13. Vorrichtung nach einem der vorhergehende Ansprüche, **dadurch gekennzeichnet, dass** eine Fixiereinrichtung (7) vorgesehen ist, mittels der die Vorrichtung (1) lösbar festlegbar ist, und/oder dass wenigstens ein lösbar an einem Grundkörper (3) der Vorrichtung (1) festgelegter Flüssigkeitsbehälter (5; 58), insbesondere ein Wassertank, vorgesehen ist..

14. Verfahren zur Zubereitung eines Heißgetränks, wobei eine Vorrichtung (1) mit einer Brühkammer (17) vorgesehen ist, in der ein Portionsbehälter (19) anordenbar ist, wobei der Portionsbehälter (19) wenigstens eine Portion einer zu extrahierenden Substanz aufweist, wobei die Vorrichtung (1) wenigstens einen Vorratsbehälter (31; 57) aufweist, der mit mehreren Portionsbehältern (19) befüllt wird, wobei die Vorrichtung (1) eine Fördereinrichtung (43) aufweist, mittels der die mehreren in dem Vorratsbehälter (31; 57) angeordneten Portionsbehälter (19) nacheinander in die Brühkammer (17) gefördert werden, **dadurch gekennzeichnet, dass** die Vorrichtung (1) eine Behälter-Fixiereinrichtung (23) aufweist, mittels der ein Trinkbehälter-Adapterelement (25) lösbar an der Vorrichtung (1) festgelegt wird.

15. Fahrzeug, insbesondere Nutzfahrzeug, mit einer Vorrichtung nach einem der Ansprüche 1 bis 13 und/oder zur Durchführung eines Verfahrens nach Anspruch 14.

## Claims

1. Apparatus for preparing a hot beverage, in particular for a vehicle, comprising a brewing chamber (17) in which a portion container (19) can be arranged, wherein the portion container (19) contains at least one portion of a substance to be extracted, wherein at least one storage container (31; 57) is provided, which can be filled with a plurality of portion containers (19), wherein a conveying device (43) is provided, by means of which the plurality of portion containers (19) which are arranged in the storage container (31; 57) can be conveyed into the brewing chamber (17) in succession, **characterized in that** a container fixing device (23) is provided, by means of which a drinks container adapter element (25) can be releasably secured to the apparatus (1).

2. Apparatus according to Claim 1, **characterized in that** at least one operating device (15) which can preferably be operated by a person, in particular a pushbutton and/or a switch, is provided, it being possible for a brewing process of the brewing chamber (17) to be activated by operation of the said operating device.

3. Apparatus according to Claim 1 or 2, **characterized in that** an open-loop and/or closed-loop control device (56) is provided, by means of which the conveying device (43) can be automatically subjected to open-loop and/or closed-loop control, wherein provision is preferably made for the open-loop and/or closed-loop control device (56) to be able to detect whether a portion container (19) is arranged in the brewing chamber (17) or not, wherein, if there is no portion container (19) arranged in the brewing chamber (17), the open-loop and/or closed-loop control device (56) automatically actuates the conveying device (43) in such a way that the conveying device (43) conveys a portion container (19) into the brewing chamber (17).

4. Apparatus according to Claims 2 and 3, **characterized in that** the open-loop and/or closed-loop control device (56) is connected to the operating device (15) so as to transmit signals, wherein provision is preferably made, if there is no portion container (19) arranged in the brewing chamber (17) when the operating device (15) is operated, for the open-loop and/or closed-loop control device (56) to automatically actuate the conveying device (43) in such a way that the conveying device (43) conveys a portion container (19) into the brewing chamber (17).

5. Apparatus according to Claim 1 or 2, **characterized in that** an operating element (54) which can preferably be operated by a person, in particular a lever element, is provided, by means of which the conveying device (43) can be, in particular manually, operated.

6. Apparatus according to one of the preceding claims, **characterized in that** an ejection device (43) is provided, by means of which a portion container (19) which is arranged in the brewing chamber (17) can be removed from the brewing chamber (17) and can be supplied to a waste container (49).

7. Apparatus according to Claim 6, **characterized in that** an operating element (54) which can preferably be operated by a person, in particular a lever element, is provided, by means of which the ejection device (43) can be, in particular manually, operated.

8. Apparatus according to Claim 6, **characterized in that** an open-loop and/or closed-loop control device (56) is provided, by means of which the ejection device (43) can be automatically subjected to open-loop and/or closed-loop control, wherein provision is preferably made for the open-loop and/or closed-loop control device (56) to be able to detect whether a brewing process is being carried out in the brewing chamber (17) or not, wherein, if a brewing process is being carried out in the brewing chamber (17), the open-loop and/or closed-loop control device (56) automatically actuates the ejection device (43), in particular immediately, after the brewing process in such a way that the ejection device (43) removes the portion container (19) from the brewing chamber (17) and supplies it to the waste container (49).

9. Apparatus according to Claim 8, **characterized in that**, immediately after the portion container (19) is removed from the brewing chamber (17), the open-loop and/or closed-loop control device (56) automatically actuates the conveying device (43) in such a way that the conveying device (43) conveys a portion container (19) into the brewing chamber (17).

10. Apparatus according to one of the preceding claims, **characterized in that** the conveying device has a transportation element (43) which can be moved between a receiving position (51) and a brewing position (53), wherein a portion container (19) can be received from the storage container (31; 57) by means of the transportation element (43) in the receiving position, and wherein the portion container (19) which is received by means of the transportation element (43) can be arranged in the brewing chamber (17) by moving the transportation element (43) from the receiving position (51) to the brewing position (53), wherein provision is preferably made for the portion container (19) which is arranged in the brewing chamber (17) to be removed from the brewing chamber (17) and supplied to a waste container (49) by moving the transportation element (43) from the brewing position (53) back to the receiving position (51).

11. Apparatus according to one of the preceding claims, **characterized in that** the at least one storage container (31) has at least one cylindrical recess (33) in which a plurality of portion containers (19) can be arranged, wherein the portion containers (19) which are arranged in the recess (33) are arranged one behind the other as seen in the cylinder vertical direction, wherein provision is preferably made for the storage container (31) to be designed in the form of a cylinder and/or in the form of a turret drum.

12. Apparatus according to one of Claims 1 to 10, **characterized in that** the storage container (57) engages, at least in regions, in the form of a ring around an, in particular circular-cylindrical, preparation device (55), which contains the brewing chamber (17), in particular at a defined distance, wherein the storage container (57) has a ring-like cavity (59) which extends in the ring circumferential direction and in which a plurality of portion containers (19) can be arranged, and wherein the storage container (57) can be twisted relative to the preparation device (55) in the ring circumferential direction in order to convey the portion container (19), which is arranged in the storage container (57), into the brewing chamber (17).

13. Apparatus according to one of the preceding claims, **characterized in that** a fixing device (7) is provided, by means of which the apparatus (1) can be releasably secured, and/or **in that** at least one liquid container (5; 58) which is releasably secured to a main body (3) of the apparatus (1), in particular a water tank, is provided.

14. Method for preparing a hot beverage, wherein an apparatus (1) having a brewing chamber (17) is provided, in which brewing chamber a portion container (19) can be arranged, wherein the portion container (19) contains at least one portion of a substance to be extracted, wherein the apparatus (1) has at least one storage container (31; 57) which is filled with a plurality of portion containers (19), wherein the apparatus (1) has a conveying device (43) by means of which the plurality of portion containers (19) which are arranged in the storage container (31; 57) are conveyed into the brewing chamber (17) in succession, **characterized in that** the apparatus (1) has a container fixing device (23) by means of which a drinks container adapter element (25) is releasably secured to the apparatus (1).

15. Vehicle, in particular utility vehicle, comprising an apparatus according to one of Claims 1 to 13 and/or for carrying out a method according to Claim 14.

## Revendications

1. Arrangement pour préparer une boisson chaude, notamment pour un véhicule, comprenant une chambre d'infusion (17) dans laquelle peut être disposé un récipient à portion (19), le récipient à portion (19) possédant au moins une portion d'une substance à extraire, au moins un réservoir (31 ; 57) étant présent, lequel peut être rempli avec plusieurs récipients à portion (19), un dispositif de transport (43) étant présent, au moyen duquel les plusieurs récipients à portion (19) disposés dans le réservoir (31 ; 57) peuvent être transportés l'un après l'autre dans la chambre d'infusion (17), **caractérisé en ce qu'**un dispositif de calage de récipient (23) est présent, au moyen duquel un élément adaptateur de récipient à boisson (25) peut être fixé de manière amovible à l'arrangement (1).

2. Arrangement selon la revendication 1, **caractérisé en ce qu'**au moins un dispositif d'actionnement (15), pouvant de préférence être actionné par une personne, notamment une touche et/ou un commutateur, est présent, par l'actionnement duquel peut être activée une opération d'infusion de la chambre d'infusion (17).

3. Arrangement selon la revendication 1 ou 2, **caractérisé en ce qu'**un dispositif de régulation et/ou de commande (56) est présent, au moyen duquel le dispositif de transport (43) peut être régulé et/ou commandé automatiquement, en prévoyant de préférence que le dispositif de régulation et/ou de commande (56) permet de détecter si un récipient à portion (19) est disposé ou non dans la chambre d'infusion (17) et, dans la mesure où aucun récipient à portion (19) n'est disposé dans la chambre d'infusion (17), le dispositif de régulation et/ou de commande (56) commandant automatiquement le dispositif de transport (43) de telle sorte que le dispositif de transport (43) transporte un récipient à portion (19) dans la chambre d'infusion (17).

4. Arrangement selon les revendications 2 et 3, **caractérisé en ce que** le dispositif de régulation et/ou de commande (56) est relié signalétiquement au dispositif d'actionnement (15), en prévoyant de préférence que, dans la mesure où aucun récipient à portion (19) n'est disposé dans la chambre d'infusion (17) lors d'un actionnement du dispositif d'actionnement (15), le dispositif de régulation et/ou de commande (56) commande automatiquement le dispositif de transport (43) de telle sorte que le dispositif de transport (43) transporte un récipient à portion (19) dans la chambre d'infusion (17).

5. Arrangement selon la revendication 1 ou 2, **caractérisé en ce qu'**un élément d'actionnement (54), pouvant de préférence être actionné par une personne, notamment un élément de levier, est présent, au moyen duquel le dispositif de transport (43) peut être actionné, notamment manuellement.

6. Arrangement selon l'une des revendications précédentes, **caractérisé en ce qu'**un dispositif d'éjection (43) est présent, au moyen duquel un récipient à portion (19) disposé dans la chambre d'infusion (17) peut être éjecté hors de la chambre d'infusion (17) et peut être acheminé à un récipient à déchets (49).

7. Arrangement selon la revendication 6, **caractérisé en ce qu'**un élément d'actionnement (54), pouvant de préférence être actionné par une personne, notamment un élément de levier, est présent, au moyen duquel le dispositif d'éjection (43) peut être actionné, notamment manuellement.

8. Arrangement selon la revendication 6, **caractérisé en ce qu'**un dispositif de régulation et/ou de commande (56) est présent, au moyen duquel le dispositif de transport (43) peut être régulé et/ou commandé automatiquement, en prévoyant de préférence que le dispositif de régulation et/ou de commande (56) permet de détecter si une opération d'infusion est effectuée ou non dans la chambre d'infusion (17) et, dans la mesure où une opération d'infusion est effectuée dans la chambre d'infusion (17), le dispositif de régulation et/ou de commande (56), d'un point de vue temporel, commandant automatiquement le dispositif d'éjection (43) après l'opération d'infusion, notamment immédiatement après celle-ci, de telle sorte que le dispositif d'éjection (43) retire le récipient à portion (19) hors de la chambre d'infusion (17) et l'achemine au récipient à déchets (49).

9. Arrangement selon la revendication 8, **caractérisé en ce que** d'un point de vue temporel, immédiatement après avoir retiré le récipient à portion (19) hors de la chambre d'infusion (17), le dispositif de régulation et/ou de commande (56) commande automatiquement le dispositif de transport (43) de telle sorte que le dispositif de transport (43) transporte un récipient à portion (19) dans la chambre d'infusion (17).

10. Arrangement selon l'une des revendications précédentes, **caractérisé en ce que** le dispositif de transport possède un élément de transport (43) qui peut être déplacé entre une position d'accueil (51) et une position d'infusion (53), un récipient à portion (19) pouvant, dans la position d'accueil (51), être reçu depuis le réservoir (31 ; 57) au moyen de l'élément de transport (43) et le récipient à portion (19) reçu au moyen de l'élément de transport (43) pouvant être disposé dans la chambre d'infusion (17) en déplaçant l'élément de transport (43) de la position d'accueil (51) à la position d'infusion (53), en prévoyant de préférence que le récipient à portion (19) disposé dans la chambre d'infusion (17) peut être retiré hors de la chambre d'infusion (17) et peut être acheminé à un récipient à déchets (49) par déplacement de l'élément de transport (43) de la position d'infusion (53) en retour à la position d'accueil (51).

11. Arrangement selon l'une des revendications précédentes, **caractérisé en ce que** l'au moins un réservoir (31) possède au moins une cavité cylindrique (33) dans laquelle peuvent être disposés plusieurs récipients à portion (19), les récipients à portion (19) disposés dans la cavité (33), vus dans le sens de la hauteur du cylindre, étant disposés les uns derrière les autres, en prévoyant de préférence que le réservoir (31) est réalisé sous forme cylindrique et/ou à la manière d'un barillet de révolver.

12. Arrangement selon l'une des revendications 1 à 10, **caractérisé en ce que** le réservoir (57) entoure de façon annulaire, au moins dans certaines zones, un dispositif de préparation (55), notamment de forme cylindrique circulaire, qui possède la chambre d'infusion (17), notamment avec un espace d'écart défini, le réservoir (57) possédant un espace creux (59) de forme annulaire qui s'étend dans le sens périphérique de l'anneau, dans lequel peuvent être disposés plusieurs récipients à portion (19), et le réservoir (57) pouvant être tourné par rapport au dispositif de préparation (55) dans le sens périphérique de l'anneau en vue de transporter le récipient à portion (19) disposé dans le réservoir (57) dans la chambre d'infusion (17).

13. Arrangement selon l'une des revendications précédentes, **caractérisé en ce qu'**un dispositif de calage (7) est présent, au moyen duquel l'arrangement (1) peut être fixé de manière amovible, et/ou **en ce qu'**au moins un récipient à liquide (5 ; 58) fixé de manière amovible à un corps de base (3) de l'arrangement (1), notamment un réservoir d'eau, est présent.

14. Procédé pour préparer une boisson chaude, un arrangement (1) comprenant une chambre d'infusion (17) étant présent, dans laquelle peut être disposé un récipient à portion (19), le récipient à portion (19) possédant au moins une portion d'une substance à extraire, l'arrangement (1) possédant au moins un réservoir (31 ; 57), lequel peut être rempli avec plusieurs récipients à portion (19), l'arrangement (1) possédant un dispositif de transport (43), au moyen duquel les plusieurs récipients à portion (19) disposés dans le réservoir (31 ; 57) sont transportés l'un après l'autre dans la chambre d'infusion (17), **caractérisé en ce que** l'arrangement (1) possède un dispositif de calage de récipient (23), au moyen duquel un élément adaptateur de récipient à boisson (25) peut être fixé de manière amovible à l'arrangement (1).

15. Véhicule, notamment véhicule utilitaire, comprenant un arrangement selon l'une des revendications 1 à 13 et/ou destiné à mettre en oeuvre un procédé selon la revendication 14.
